# EUROPEAN PATENT SPECIFICATION

(11) **EP 4 436 126 B1**
(45) Date of publication and mention of the grant of the patent: **12.08.2026**
(21) Application number: 23305399.0
(22) Date of filing: 23.03.2023
(51) Int. Cl.: H04L 45/02, H04L 45/76, H04W 28/02, H04W 40/02

(54) **A TSN BRIDGE MODEL FOR UE-TO-UE 5G SYSTEMS WITH MULTIPLEXING CAPABILITIES**
TSN-BRÜCKENMODELL FÜR UE-ZU-UE-5G-SYSTEME MIT MULTIPLEX-FÄHIGKEITEN
MODÈLE DE PONT TSN POUR SYSTÈMES UE-À-UE 5G À CAPACITÉS DE MULTIPLEXAGE

(43) Date of publication of application: 25.09.2024
(73) Proprietor: Mitsubishi Electric R&D Centre Europe BV, 1119 NS Schiphol Rijk Amsterdam (NL); MITSUBISHI ELECTRIC CORPORATION, Chiyoda-ku Tokyo 100-8310 (JP)
(72) Inventor: BONNEVILLE, Hervé, 35708 RENNES CEDEX 7 (FR); GRESSET, Nicolas, 35708 RENNES CÉDEX 7 (FR); LETESSIER, Jonathan, 35708 RENNES CEDEX 7 (FR)
(74) Representative: Plasseraud IP

(56) References cited:
- WO-A1-2020/245679
- US-A1- 2022 312 258

## Description

### Technical Field

This disclosure pertains to the field of telecommunications.

The disclosure more particularly relates to a method for determining a virtual topology of a wireless bridge of a communication system within a time-sensitive network, to a communication system and to a computer program.

### Background Art

US 2022/312258 A1 and WO 2020/245679 A1 describe known techniques in the technical field. The disclosure aims at integrating a wireless bridge in a time-sensitive network in a way that better represents the capacities of the wireless bridge for UE-to-UE communication through base stations.

European patent application EP 22306171.4, filed on August 2, 2022, defines a 5GS TSN model for data flows transmitted between an end station on UPF side (NW-TT) and end stations on UE side (DS-TT). It does not cover the case of data flows between two UEs, one data flow being composed by a UL trunk and a DL trunk.

According to a state-of-the-art approach, it is generally possible to modify a bridge model by adding connections between specific ports to enable communication between these ports.

However, in the present case, the 5GS TSN model disclosed in EP 22306171.4 was not designed for the purpose of specifically depicting UE-to-UE communication through one or more base stations.

Due to structural issues, adding such connections according to the above state-of-the-art approach would be undesirable due to inducing high jitter and poor performances.

For this reason, it is necessary to determine a new wireless bridge model, which needs to:
- permit UE to UE communication through one or more base stations,
- limit transmission jitter,
- optimise wireless performance and capacity, and
- take benefit of multiplexing wireless communication even when packets are presented in TDMA fashion only.

### Summary

This invention is defined by the appended claims. This disclosure improves the situation.

It is proposed a method according to claim 1.

The proposed virtual topology permits UE-to-UE communication through one or more base stations due in particular to the UPF ring bridge connected to the first and second sides. The proposed virtual topology is further accurate for representing a 5G system integrated in a TSN network since, in a 5G system, all UE-to-UE communications transit through the user plane function (UPF) of the core network. The separation of the two sides allows optimizing time transmission since a UE-to-UE communication may be performed in two separate steps: first transmitting a packet from the source towards the UPF ring bridge, then transmitting the packet from the UPF ring bridge towards the recipient.

For example, the user plane function (UPF) ring bridge may comprise:
- a first port providing access to a core network side (NW-TT),
- a second port providing access to the first side (UL),
- a third port providing access to the second side (DL),
- a unidirectional internal link from the second port to the first port,
- a unidirectional internal link from the first port to the third port, and
- a unidirectional internal link from the second port to the third port.

This topology of the UPF ring bridge allows representing UE-to-CN communication by using the internal link from the second port to the first port, CN-to-UE communication by using the internal link from the first port to the third port and UE-to-UE communication by using the internal link from the second port to the third port.

For example, the first side (UL) may comprise a multiplexer (Mux), the second side (DL) may comprise a demultiplexer (Demux), and the virtual topology may comprise, on each side, a corresponding radiocommunication transmission bridge.

The multiplexer combined to a radiocommunication transmission bridge allow optimizing wireless performance and capacity for UE-to-CN communication and for the uplink leg of UE-to-UE communication. This allows taking benefit of multiplexing wireless communication even when packets are presented in TDMA fashion only. Similarly, the demultiplexer combined to a radiocommunication transmission bridge allow optimizing wireless performance and capacity for CN-to-UE communication and for the downlink leg of UE-to-UE communication.

For example, the multiplexer (Mux) may comprise a first port providing access to the user plane function (UPF) ring bridge, Mul second ports providing access to the radiocommunication transmission bridge on the first side (UL), and Mul unidirectional internal links, each from a corresponding one of the Mul second ports to the first port, and the demultiplexer (Demux) may comprise a first port providing access to the user plane function (UPF) ring bridge, Mdl second ports providing access to the radiocommunication transmission bridge on the second side, and Mdl unidirectional internal links, each from the first port to a corresponding one of the Mdl second ports. In the context of the invention, a "unidirectional link" from A to B is a link having a finite delay in the specified direction, which may also be called "desired direction" or "favoured direction", i.e. for transmitting a packet from A to B, and a delay having an infinite or a very high finite value in the opposite direction, i.e. for transmitting a packet from B to A. This definition may apply to any unidirectional link mentioned in the present document, for instance to one or more of, or all of, the unidirectional internal links of the user plane function ring bridge, and/or to one or more of, or all of, the unidirectional internal links of the multiplexer. Each unidirectional link may optionally be a so-called "perfect" unidirectional link, defined as a link having a delay substantially equal to zero in the desired direction and a delay having an infinite or a very high finite value in the opposite direction. The delay "substantially equal to zero" is smaller than or equal to a very small finite value. As nonlimiting examples, the "very small finite value" may be in a range of 0 to 10 nanoseconds, preferably in a range of 0 to 1 nanosecond, more preferably in a range of 0 to 1 picosecond, whereas the "very high finite value" may bethe maximum value authorized on the interface with the controller, typically a few seconds..

For example, the wireless bridge may have Mul independent transmission channels for uplink communication and Mdl independent transmission channels for downlink communication. A plurality of transmission channels are said "independent" when communication performance offered by any one of these transmission channels is unaffected by coexisting traffic through any other one of these transmission channels. In this regard, independent transmission channels can, for instance, each connect a corresponding cluster of UEs in a set of independent clusters of UEs, with such independent clusters of UEs being defined such that communication performance offered to a UE belonging to one cluster is not impacted by the traffic to or from any UE belonging to another cluster.

For example, the radiocommunication transmission bridge on the first side may comprises Mul first ports providing access to the multiplexer (Mux), Mp second ports providing access to the user equipments, and Mul unidirectional internal links, each from one of the Mp second ports to one of the Mul first ports, the radiocommunication transmission bridge on the second side may comprise Mdl first ports providing access to the demultiplexer (Demux), Mp second ports providing access to the user equipments, and Mdl unidirectional internal links, each from one of the Mdl first ports to one of the Mp second ports, and the Mul unidirectional internal links and the Mdl unidirectional internal links may be associated to delays representing at least radio transmission delays.

For example, the virtual topology may comprise a virtual splitter extending in both sides and comprising, in the first side, the multiplexer and, in the second side, the demultiplexer.

For example, the virtual topology may comprise a transmission bridge extending in both sides and comprising, in each side, the corresponding radiocommunication transmission bridge.

It is further proposed a communication system according to claim 10.

It is further proposed a computer program comprising instructions which, when the program is executed by a computer, cause the computer to carry out the above method.

### Brief Description of Drawings

Other features, details and advantages will be shown in the following detailed description and on the figures, on which:
**Fig. 1**

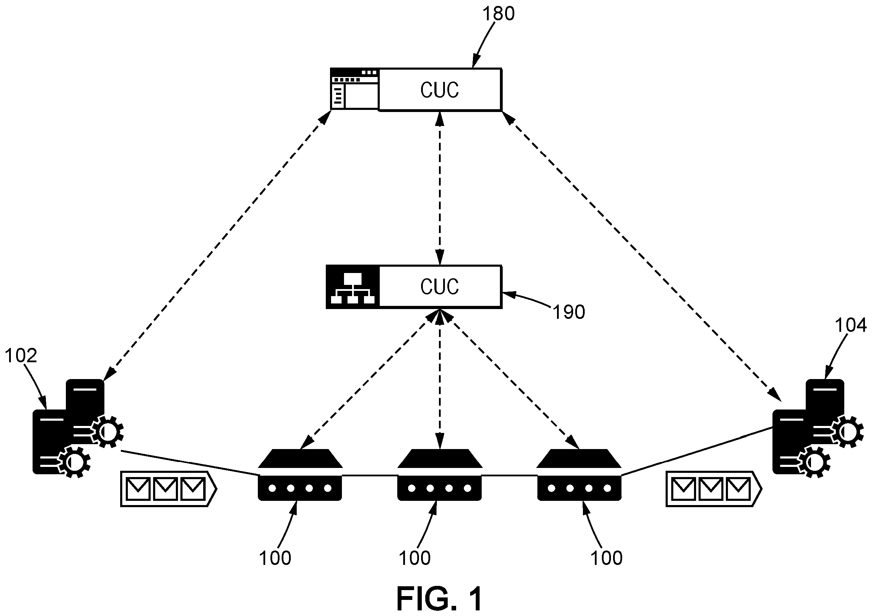

   [Fig. 1] is a known representation of a time-sensitive network, or "TSN network", as defined in prior art.
**Fig. 2**

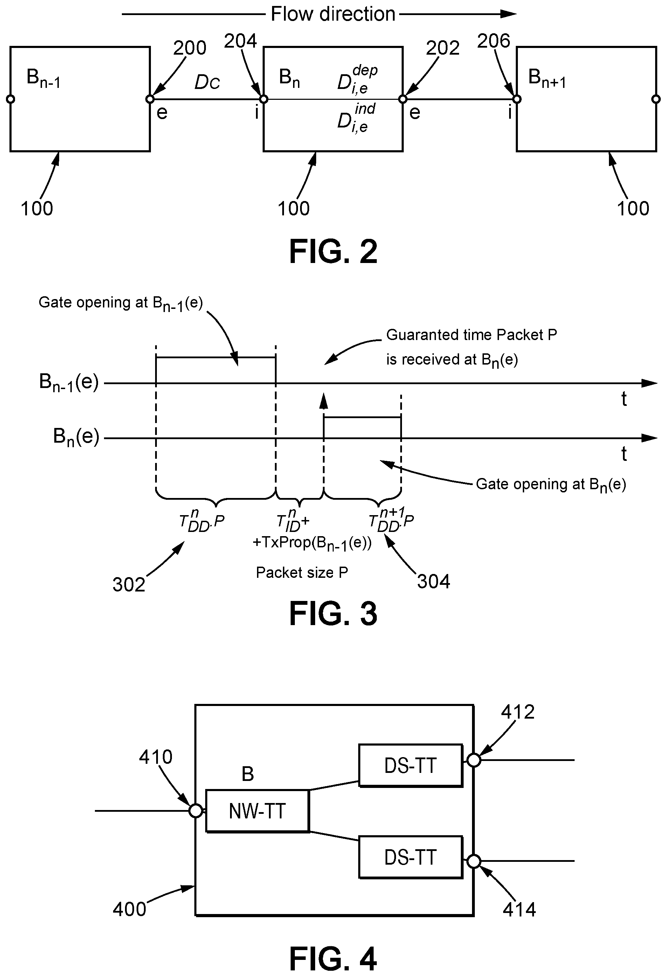

   [Fig. 2] is a TSN bridge model, as defined in prior art, that illustrates a known delay computation between two end stations through a TSN bridge.
**Fig. 3**
   [Fig. 3] illustrates a gate opening of a TSN bridge and a packet propagation along a data path according to the TSN bridge model of [Fig. 2], as known from prior art.
**Fig. 4**
   [Fig. 4] is a state-of-the-art representation of a 5G TSN bridge.
**Fig. 5**

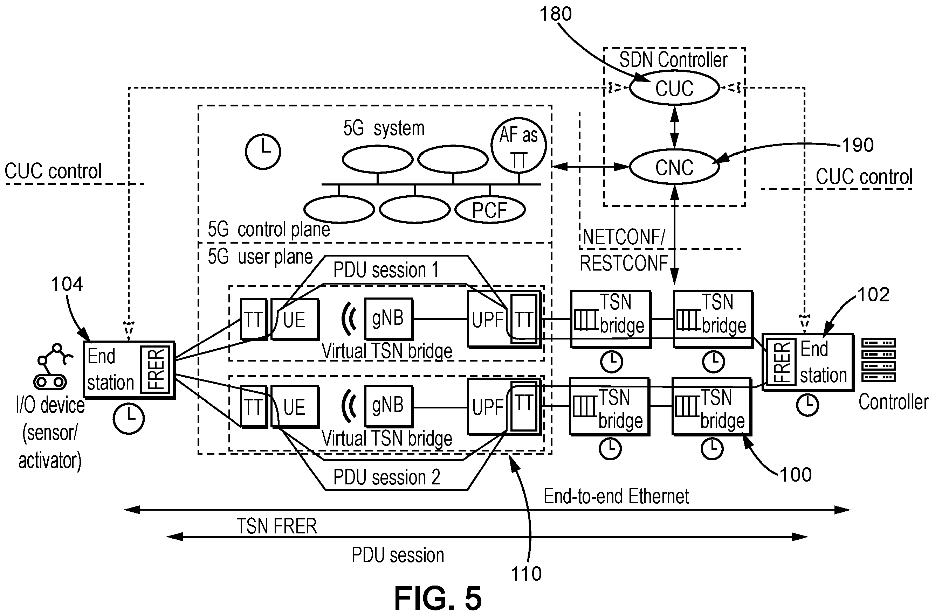

   [Fig. 5] is a state-of-the-art representation of a 5G TSN bridge within a TSN network.
**Fig. 6**

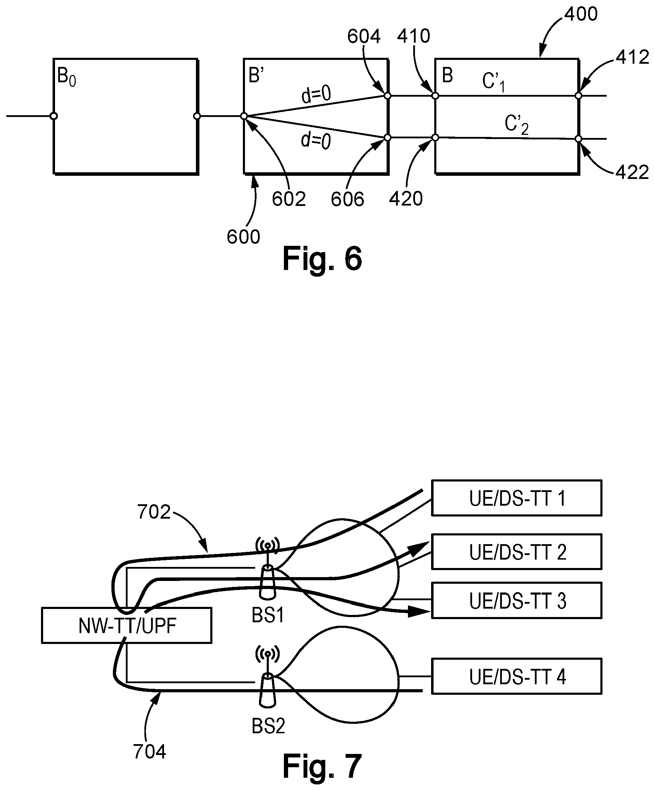

   [Fig. 6] is a 5G TSN bridge model for NW-TT - DS-TT communications as proposed in European patent application EP 22306171.4.
**Fig. 7**
   [Fig. 7] illustrates two different data paths between user equipments connected through a wireless TSN bridge, according to an embodiment.
**Fig. 8**

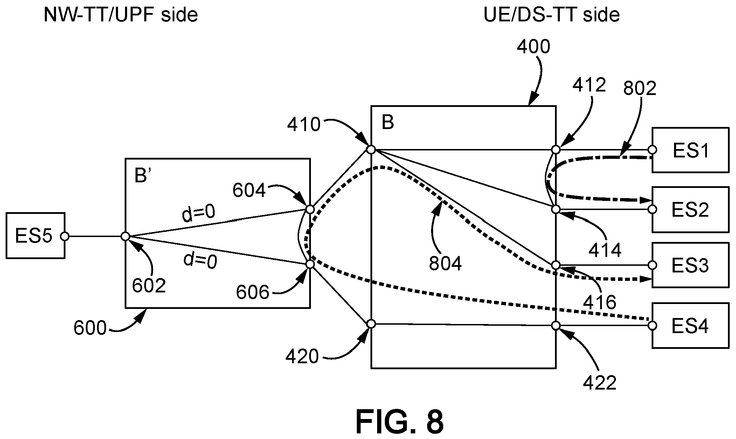

   [Fig. 8] depicts a modified version of the model proposed in European patent application EP 22306171.4, according to an embodiment. [Fig. 8] further illustrates, in this depicted model, a computation of delays corresponding to data streams using the data paths depicted in [Fig. 7].
**Fig. 9**

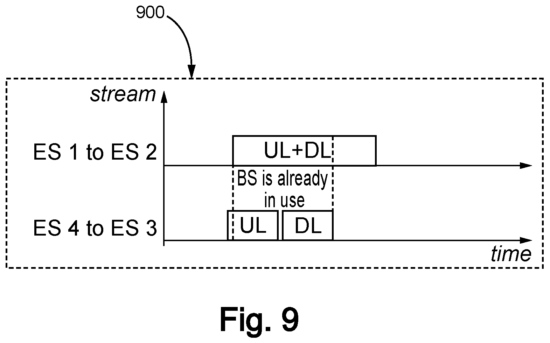

   [Fig. 9] illustrates a possible TSN scheduling according to the model depicted in [Fig. 8], in an embodiment.
**Fig. 10**

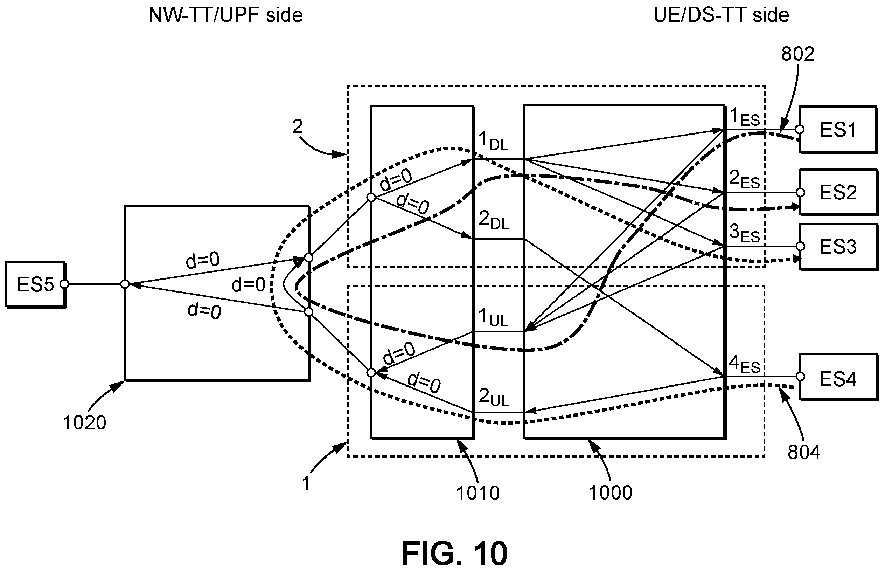

   [Fig. 10] illustrates a TSN bridge model according to an embodiment.
**Fig. 11**

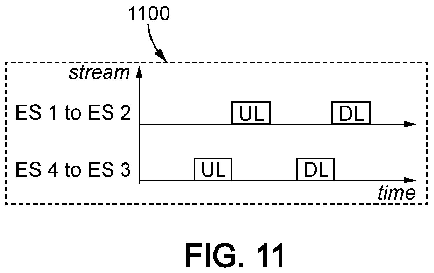

   [Fig. 11] illustrates a possible TSN scheduling according to the model depicted in [Fig. 11], in an embodiment.
**Fig. 12**

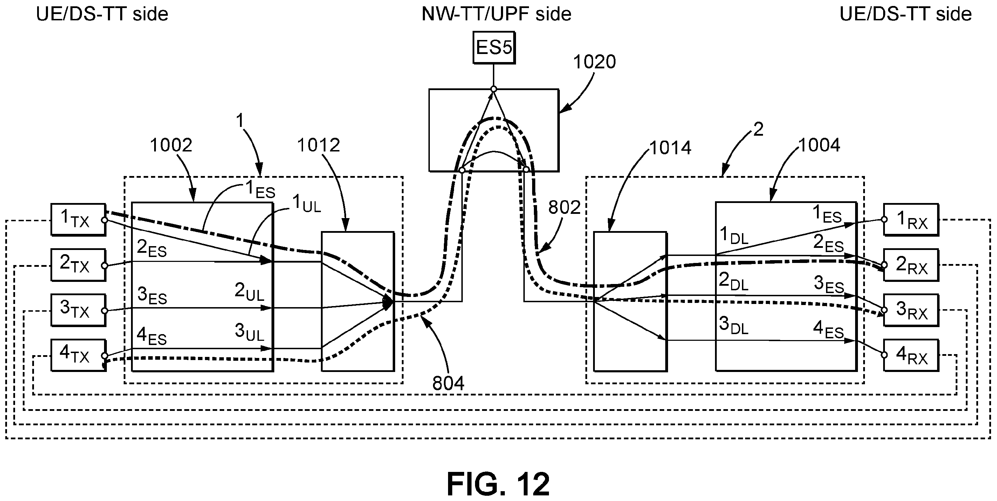

   [Fig. 12] illustrates another TSN bridge model according to an embodiment.

### Description of Embodiments

Time-Sensitive Networking (TSN) is a set of standards under development by the Time-Sensitive Networking task group of the IEEE 802.1 working group. An aim is to provide a complete real-time communication solution with deterministic quality of service (QoS).

For achieving a guaranteed end to end latency for the transmission of a packet between a talker and a listener, it is necessary to rely on a predetermined data path or route and scheduling of operation of the network elements along the path.

A TSN network connects end stations (ES) together. End stations are devices sitting at an edge of the TSN network and that may communicate with one another through the TSN network. End stations typically include a talker (102) which is a source or a sender of a data stream and a listener (104) which is a receiver or a destination of the data stream.

A TSN network further comprises several elements as illustrated in Figure 1.

Different traffic classes with different priorities may coexist on a TSN network. Each traffic class may have specific requirements, for example in terms of available bandwidth and/or of end-to-end latency. Data stream requirements are therefore advertised by the end stations to a Centralized User Configuration system, denoted CUC (180), which is a system configured to discover the end stations, their capabilities and user requirements, to configure delay-optimized TSN features and to transmit these TSN features to a Centralized Network Configuration node, denoted CNC (190). The above TSN features may include for instance TSN data stream requirements and TSN network topology.

The TSN network further relies on one or more TSN bridges (100). TSN bridges are switching devices that enable communication through the TSN network between any number of talkers and of listeners. Packets arriving to one port (ingress) of a bridge can be routed to another port (egress) in a bounded delay. The packets are buffered at one egress port until the port is opened following a time-gating window table.

The time-gating window is determined through calculations performed by the CNC based on the TSN features received from the CUC and further based on information received from the TSN bridges. CNC discovers the physical topology of the TSN network by communicating with the TSN bridges and getting their capabilities to further schedule packets between devices. More specifically, the information received by the CNC from the different TSN bridges may include egress and ingress port identification, traffic class and QoS indicators such as routing delays in the form of minimum and maximum delays per port pair.

The CNC may then calculate a schedule, i.e. transmission times, for the intermediary bridges between the TSN end stations, and control parameters of a time aware shaping (TAS) of the different bridges as well as routing decisions such as bridge selection. These calculations are performed to fulfil the requirements of the TSN data streams.

The TSN bridges relay the packets from one port to another, according to some parameters specific to each port pair, represented by an internal link. The parameters are usually: a dependent delay (i.e., which depends on the payload and can be seen as the inverse of the instantaneous throughput of the link) and an independent delay (i.e., a fixed delay for each packet transmission).

In a centralized implementation of the TSN network, these parameters are provided to the CNC which gathers the topology and capacities of the network links and the requirements of the data streams. After defining the data path for transmitting packets from one end station to another end station through the bridges of the TSN network, the CNC computes the scheduling of the gates openings for the packets to flow from one ES to another ES while guaranteeing their transmission delay. For doing so, the CNC computes the cumulated delay from egress port to egress port of two consecutive bridges on the data path, where the egress ports are defined at the output port of the bridges in the flow direction of the packets along the path (while ingress ports are the bridges input ports).

In practice, for each bridge port, the packets are buffered and transmitted sequentially when the gate opens. Thus, time multiplexing is inherent to each bridge port while concurrent transmission is possible between two different ports of a TSN bridge.

By convention in the current TSN standards, when flowing through a TSN bridge, the end-to-end delay is computed by taking into account the aggregated delays of the transport link between the previous bridge (external link) on the path and the internal link of the bridge between the input (ingress) and output (egress) ports. In a typical TSN network, these aggregated delays are considered in the central scheduler (CNC) that guarantees that no packet collision occurs on the transport links in the time domain.

Figure 2 depicts several consecutive bridges (100) on the data path associated to a given data stream. Following the flow direction, the data path passes through an ingress port of a bridge Bₙ₋₁, then through an egress port (200) of the bridge Bₙ₋₁, then through an ingress port (204) of a bridge Bₙ, then through an egress port (202) of the bridge Bₙ, then through an ingress port (206) of yet another bridge Bₙ₊₁, and so on.

An oriented port pair is defined as a pair of (ingress, egress) ports along a data path. It must be noted that ports are usually bi-directional with unbalanced capacities for internal links flowing in one direction or the other. A port pair may thus be represented as two independent oriented port pairs having opposite orientations.

In the example of Figure 2, the ingress port (204) of the bridge Bₙ and the egress port (202) of the bridge Bₙ form an oriented port pair, its orientation following the data flow and thus being from the egress port (200) of the bridge Bₙ₋₁ to the egress port (202) of the bridge Bₙ.

Considering the above oriented port pair, the dependent delay ${D}_{i , e}^{dep}$ provided by the bridge Bₙ is the sum of a delay corresponding to cable bandwidth, noted Dc, between the egress port (200) of the bridge Bₙ₋₁ and the ingress port (204) of the bridge Bₙ, and of delay corresponding to the internal bandwidth of the bridge Bₙ between ingress port (204) of the bridge Bₙ and egress port (202) of the bridge Bₙ.

Still considering the above oriented port pair, the independent delay ${D}_{i , e}^{ind}$ provided by the bridge Bₙ is a delay corresponding to internal mechanisms in the bridge Bₙ, which are not linked to bandwidth.

Further, each egress port of abridge is associated to a transmission delay, noted TxPropagationDelay, in a cable connecting it to a corresponding ingress port of another bridge. This applies in particular to the cable connecting the egress port (202) of the bridge Bₙ with the ingress port (206) of the bridge Bₙ₊₁.

Aggregating, or summing, all the above delays allows computing an end-to-end delay for communication between two end stations through the consecutive bridges according to the represented data path.

Figure 3 illustrates an example of bridges gate opening schedule that may be defined by the CNC in order to propagate a packet along the data path. This example of schedule is suitable to achieve a time guaranteed transmission of the packet.

A first time interval ${T}_{DD}^{n} . P$ may be set for opening (302) a first gate at the egress port (200) of the bridge Bₙ₋₁. This allows a packet of size P to be transmitted from the bridge Bₙ₋₁. Then, after a second time interval ${T}_{ID}^{n} + TxProp \left({B}_{n - 1}\left(e\right)\right)$, which is consecutive to the first time interval, the packet of size P is received at the egress port (202) of the bridge Bₙ. A third time interval ${T}_{DD}^{n + 1}$*. P* may be set for opening (304) a second gate at the egress port (202) of the bridge Bₙ. This allows the packet of size P to be transmitted from the bridge Bₙ to the next network element.

As previously mentioned, the end-to-end delay is computed by taking into account the aggregated delays of the transport link between the previous bridge (external link) on the path and the internal link of the bridge between the input (ingress) and output (egress) ports. This is described in the 802.1QCC standard as: "The length-dependent delay typically includes the time to receive and store each octet of the frame, and this time depends on the link speed of the ingress Port. For example, if the ingress Port is operating at 1 Gb/s, both dependentDelayMin and dependentDelayMax can return 8000. If an internal communication mechanism exists within the Bridge's architecture (i.e., in the relay), the time for that mechanism is added to the frame-dependent delay. For example, if a 100 Mb/s serial link connects the ingress and egress Ports, the previous example with 1 Gb/s link speed can return 88000 for both dependentDelayMin and dependentDelayMax".

Figure 4 represents a TSN wireless bridge model of a 5GS according to the state of the art. A TSN wireless bridge model is a virtual topology of a network element behaving as an actual bridge when integrated in a TSN network. The 5GS is an example of one such element. In the state-of-the-art approach of the integration of 5G systems (5GS) in a TSN network, the 5GS is represented, or declared to the CNC (190), as a regular TSN bridge (400), with a one-to-many topology containing ports/gates where the bridge (400) has one NW (Network) port (410), and two DS (Device-Side) ports (412, 414). A more complete view of the internal structure of the 5G TSN bridge, describing the main components of the 5G Core Network (CN) and Radio Access Network (RAN) is given in Figure 5.

In the context of a one-to-many bridge, the bottleneck lies in the external transport link, on which a TDMA (Time Division Multiple Access) strategy is applied as a result of the CNC scheduling. This does not impact the performance as soon as the capacity of the internal links is much higher than the one of the transport link. However, the convention of considering aggregated delays induces performance degradation when the bridge has the capability of using concurrently the internal links. Indeed, even though the internal links of the bridges can be used concurrently, they are in practice used sequentially as a result of the TDMA on the input transport link.

Such a situation occurs when considering a 5G TSN bridge, the internal links capacity is related with the wireless transmission capacity, which is in general worse than the input link capacity relying on wired ethernet. By using the state of art model and representing the 5GS as a one-to-many topology, a TDMA strategy will be applied among all packets flowing though the 5G TSN bridge. Unfortunately, the TDMA is often not the best multiplexing scheme for a wireless network, as other multiplexing dimensions can be exploited without loss of performance, such as frequency (using several sub-bands in the frequency domain), space (using multiple antennas), site (frequency reuse among several non-interfering sites). Thus, the state-of-the-art definition of a model of the 5G TSN bridge fails to exploit the multiplexing capability of the 5GS, which results in sub-optimal performance.

European patent application EP 22306171.4 has proposed a TSN bridge model of a 5GS that allows to improve the performance of a 5GS bridge, for example increasing the number of TSN data streams supported and/or reducing the guaranteed delay of TSN data streams flowing through the 5GS bridge. As illustrated in Figure 6, EP 22306171.4 describes a wireless bridge model for DS-TT-UPF- DS-TT data streams, in other words for data flows transmitted between an end station on UPF side (NW-TT) and end stations on UE side (DS-TT). The UEs may receive or transmit packets from or to the TSN network. This bridge model for downlink and uplink allows exploiting multiplexing dimensions by grouping UEs in independent clusters. A cluster is defined such that communication performance offered to a UE belonging to one cluster is not impacted by the traffic to or from any UE belonging to another cluster. This bridge model comprises a multiplexing/demultiplexing block B' (600) that comprises a NW-TT port (602) and a number *Mcl* of DS-side ports (604, 606) that corresponds to the number of multiplexing dimensions, i.e. the number of possible parallel transmissions of the 5GS. This model further comprises a main block B (420) with *Mcl* NW-side ports (410, 420), each one connected to a corresponding one of the DS-side ports (604, 606) of the multiplexing/demultiplexing block, *Mp* DS-TT ports (412, 422), each one associated to a corresponding UE of a set of *Mp* UEs handled by the wireless bridge and *Mcl* independent internal channels, each connecting a NW-side port with a number of DS-TT ports associated to UEs belonging to the same cluster.

In a 5G system, one or several end stations connected to a UE may transmit packets to another end station connected to another UE. This communication can be direct from one UE to the other UE (called sidelink in 3GPP) or can be divided in two steps: an uplink step, where a UE sends a packet to a 5G base station, and a downlink step, where the base station or another one sends the packet to the destination UE. Data is transferred from one base station to another base station through a core network. In a 5GS, each base station has a scheduler that manages uplink and downlink steps to avoid wireless interference and optimize communication time.

EP 22306171.4 does not cover the case of data flows between two UEs, one data flow being composed by an UL trunk and a DL trunk but only covers one-way communications (UL or DL).

An update is required in order to extend the wireless bridge model to also support DS-TT - DS-TT communications.

Examples of such communications are provided in Figure 7. Figure 7 represents a 5GS bridge comprising one NW-TT/UPF, two base stations BS1 and BS2 and four UE/DS-TT. Three of the UE/DS-TT (UE1, UE2, UE3) are connected to the first base station BS1 and the last one (UE4) is connected to the second base station BS2. Two UE/DS-TTs communications are further illustrated: a first data flow (702) from UE1 to UE2, and a second data flow (704) from UE4 to UE3 (704). It is noted that both data flows (702, 704) go through the UPF.

To add the capability of UE-to-UE communication to the 5G TSN bridge model depicted in Figure 6, modifications as depicted in Figure 8 are now proposed in the present document. For example, one can add connections with a delay between DS-TT ports (412, 414) which are connected to the same NW-side port (410) of the main block (400) for communication between UEs belonging to the same cluster. One can further add connections with a null delay between DS-side ports (604, 606) of the demultiplexing block (600) to permit communication between UEs belonging to different clusters and connected to DS-TT ports (416, 422) which are not connected to the same NW-side port of the main block (400).

It is recalled that links between bridges/devices are bidirectional. A bridge port has an ingress (input) and an egress (output) connection. Inside a bridge, two ports are connected as follows. Ingress port i is connected to egress port j forming an oriented port pair ij having a capability/delay noted d_{j_i}. Ingress port j is connected to egress port i forming an oriented port pair ji having a capability/delay noted d_{i_j} which may be different from d_{j_i}.

A first communication (802) is represented from a first end station ES1 to a second end station ES2. ES1 is connected to a first DS-TT port (412). ES2 is connected to a second DS-TT port (414). This may correspond for instance to a scenario where two UEs are attached to the same base station BS₁. The communication delay d_{414_412} provided to the CNC for port pair (412, 414) may then correspond to a first sum delay of an uplink transmission from the first DS-TT port (412) to the base station BS1 and of a downlink transmission from BS1 to the second DS-TT port (414).

A second communication (804) is represented from a fourth end station ES4 to a third end station ES3. ES3 is connected to a third DS-TT port (416). ES4 is connected to a fourth DS-TT port (422). The third DS-TT port (416) is connected to the first NW-side port (410) while the fourth DS-TT port (422) is connected to a second, distinct, NW-side port (420). This may correspond for instance to a scenario where two UEs are attached to different base stations BS₁, BS2. The communication delay d_{422_416} provided to the CNC may then correspond to a second sum delay of an uplink transmission from the fourth DS-TT port (422) to the second NW-side port (420), noted d_{420_422} and of a downlink transmission from the first NW-side port (410) to the third DS-TT port (416), noted d_{416_410}.This communication can be done in two steps with the uplink step first and the downlink step afterwards.

When focusing only on the first communication (802), the first sum delay declared to the CNC correctly represents the transmission time by taking into account the uplink capacity and frame duration as well as the downlink capacity and frame duration. The same is true when focusing only on the second communication (804): the second sum delay declared to the CNC correctly represents the transmission time by taking into account the uplink capacity and frame duration as well as the downlink capacity and frame duration.

Figure 9 shows a time schedule (900) for opening and closing gates at a base station BS1 in an exemplary scenario where the model represented in Figure 8 is used.

When considering that both communications are activated simultaneously, and since the model represented in Figure 8 allows it, the CNC may choose to open gates of communication for the first communication (802) and for the second communication (804) at the same time or at times that are close. However, in practice, the same base station cannot be used at the same time for the first communication (802) and for the second communication (804) without impacting the transmission times. As a result, at least one of the first and second sum delays declared to the CNC cannot be guaranteed. It has to be noted that the same issue may appear when scheduling a first communication between the first end station ES1 and the second end station ES2 and a second communication between the third end station ES5 and the fourth end station ES3. More generally, scheduling DS-TT - DS-TT communications at the CNC using the wireless TSN bridge model represented in Figure 8 may lead to contention at base stations, due to the structure of the wireless TSN bridge model.

For a communication between two UEs handled by the same BS, the announced delay to the CNC should not be smaller than the sum of the uplink (UL) delay and of the downlink (DL) delay. This is necessary to reserve the use of the link between the two UEs for the communication during the entirety of the transmission time.

It is now proposed, in the present document, examples of an UL/DL wireless TSN bridge model, suitable as a model for a 5GS in a TSN network, that allows UE-to-UE communication and that exhibits the same performance as the one-way UL or DL TSN bridge disclosed in EP 22306171.4.

As depicted in Figures 10 and 12, the proposed wireless UL/DL TSN bridge model comprises a first side (1) for handling uplink (UL) communication, a second side (2) for handling downlink (DL) communication and at least a user plane function (UPF) ring bridge (1020) connected to the first and the second sides.

The UPF ring bridge (1020) contains three internal oriented links: a first internal link for communications from the first side (1) to the NW-TT, a second internal link for communication from the NW-TT to the second side (2) and a third internal link for communications from the first side (1) to the second side (2). The UPF ring bridge (1020) allows better exploiting the 5G system. All communications pass through the UPF ring bridge (1020), similarly to how, in practice, all communications handled by a 5GS pass through the User Plane Function (UPF), which is one of the central elements of the core system architecture.

The communication links depicted in Figures 10 and 12 are oriented communication links: a UL/DL link must be used only for UL/DL communication respectively. This functionality is conveyed by the delays declared for each communication link. In its privileged orientation, a link has a declared delay equal to zero or to the transmission delay, whereas in its non-privileged orientation, the link has a declared delay equal to infinity. In Figure 10, delay in the arrow link direction is equal to a transmission delay, and the opposite direction is equal to infinity: *d_{i_j} = d* and *d_{j_i}* = ∞.

The delays for the three internal links of the UPF ring bridge (1020) are set to infinity in the undesired direction, and to zero in the desired direction, since this element is considered as perfect.

The first side (1) is configured in UL mode: all internal communication links in the first side (1) are unidirectional and oriented from the end station side to the UPF ring bridge side. To do so, infinite delays may be set for the DL mode communication, which is undesired in the first side (1).

The second side (2) is configured in DL mode: all internal communication links in the second side (2) are unidirectional and oriented from the UPF ring bridge side to the end station side. To do so, infinite capacity/delays may be set for the UL mode communication, which is undesired in the second side (2).

The first side (1) may further comprise a multiplexer combined with a first radiocommunication transmission bridge. Similarly, the second side (2) may further comprise a demultiplexer combined with a second radiocommunication transmission bridge. The multiplexer and the demultiplexer are each akin to the multiplexing/demultiplexing block (600) of Figure 6: they each comprise a NW-side port and a number M of DS-side ports that corresponds to the number of multiplexing dimensions, i.e. the number of possible parallel transmissions of the 5GS in the corresponding communication mode, which is UL for the multiplexer and DL for the demultiplexer.

As depicted on Figure 10, the proposed wireless UL/DL TSN bridge model may further comprise an uplink/downlink (UL/DL) splitter (1010) that comprises the multiplexer and the demultiplexer. The multiplexer forms one half and the demultiplexer the other half of the UL/DL splitter. As depicted on Figure 10, the wireless UL/DL TSN bridge model may further comprise a transmission bridge (1000) that comprises two halves respectively formed of the first radiocommunication transmission bridge and of the second radiocommunication transmission bridge. Hence, a 5GS may declare itself to the CNC (190) as a combination of three bridges: the UPF ring bridge (1020), the UL/DL splitter (1010) and the transmission bridge (1000).

Alternately, the 5GS may declare itself to the CNC (190) as a combination of five bridges as depicted on Figure 12: the first radiocommunication transmission bridge (1002), the multiplexer (1012), the UPF ring bridge (1020), the demultiplexer (1014) and the second radiocommunication bridge (1004).

The proposed wireless UL/DL TSN bridge model avoids contentions for UE-to-UE communications through base stations while exhibiting, for communications between UEs and the core network, the same performances as the one-way UL or DL TSN bridge disclosed in EP 22306171.4.

Time transmission is optimized since all transmission delays are split in a UL leg having a first delay and a DL leg having a second delay. Any UE may then transmit a first packet, as a UL leg of a first communication and next be immediately available to receive a second packet, as a DL leg of a second communication.

The behavior of the proposed wireless UL/DL TSN bridge model is not ambiguous with the behavior of the 5GS. When considering both the first communication (802) and the second communication (804), a time schedule (1100) as shown in Figure 11 may be prepared by the CNC (190), where UL packets are first transmitted through the first side (1) and DL packets are then transmitted through the second side (2), due to a bottleneck at the UPF ring bridge (1020). Hence the proposed model exposes to the CNC that UE-to-UE communications actually go through the UPF, and hence the CNC (190) can take this feature into account.

## Claims

1. A method for determining a virtual topology of a wireless bridge (100, 400) of a communication system within a time-sensitive network, the wireless bridge handling a set of *M_{P}* user equipments, the communication system further comprising a centralized network configuration node (190), **characterized by**
the method comprising building a virtual topology of the wireless bridge and providing the virtual topology of the wireless bridge to the central network configuration node,
wherein the virtual topology comprises a first side (1) for handling uplink communication, a second side (2), for handling downlink communication and at least a user plane function ring bridge (1020) connected to the first and the second sides, wherein the user plane function ring bridge comprises a first internal link for communications from the first side to a core network side, a second internal link for communication from the core network side to the second side and a third internal link for communications from the first side to the second side.

2. The method of claim 1, wherein the user plane function ring bridge comprises:
- a first port providing access to the core network side,
- a second port providing access to the first side,
- a third port providing access to the second side,
- the third internal link is a unidirectional internal link from the second port to the first port,
- the second internal link is a unidirectional internal link from the first port to the third port, and
- the first internal link is a unidirectional internal link from the second port to the third port.

3. The method of claim 1 or 2, wherein:
unidirectional internal links have delays in the favoured direction equal to zero or to a very small value.

4. The method of claim 1 or 2, wherein:
- the first side comprises a multiplexer (1012) Mux,
- the second side comprises a demultiplexer (1014) Demux, and
- the virtual topology comprises, on each side, a corresponding radiocommunication transmission bridge (1002, 1004).

5. The method of claim 3, wherein:
- the multiplexer comprises a first port providing access to the user plane function ring bridge, *Mul* second ports providing access to the radiocommunication transmission bridge on the first side, and *Mul* unidirectional internal links, each from a corresponding one of the *Mul* second ports to the first port, and
- the demultiplexer comprises a first port providing access to the user plane function ring bridge, *Mdl* second ports providing access to the radiocommunication transmission bridge on the second side, and *Mdl* unidirectional internal links, each from the first port to a corresponding one of the *Mdl* second ports.

6. The method of claim 4, wherein the wireless bridge has *Mul* independent transmission channels for uplink communication and *Mdl* independent transmission channels for downlink communication.

7. The method of any one of claims 3 to 5, wherein:
- the radiocommunication transmission bridge on the first side comprises *Mul* first ports providing access to the multiplexer, *Mp* second ports providing access to the user equipments, and *Mul* unidirectional internal links, each from one of the *Mp* second ports to one of the *Mul* first ports,
- the radiocommunication transmission bridge on the second side comprises *Mdl* first ports providing access to the demultiplexer, *Mp* second ports providing access to the user equipments, and *Mdl* unidirectional internal links, each from one of the *Mdl* first ports to one of the *Mp* second ports, and
- the *Mul* unidirectional internal links and the *Mdl* unidirectional internal links being associated to delays representing at least radio transmission delays.

8. The method of any one of claims 3 to 6, wherein the virtual topology comprises a virtual splitter (1010) extending in both sides and comprising, in the first side, the multiplexer and, in the second side, the demultiplexer.

9. The method of any one of claims 3 to 7, wherein the virtual topology comprises a transmission bridge (1000) extending in both sides and comprising, in each side, the corresponding radiocommunication transmission bridge.

10. A communication system within a time-sensitive network, the communication system comprising a wireless bridge (100, 400) handling a set of P user equipments, the communication system further comprising a centralized network configuration node (190), **characterized by** the communication system being configured for building a virtual topology of the wireless bridge and providing the virtual topology of the wireless bridge to the central network configuration node, wherein the virtual topology comprises a first side (1)for handling uplink communication, a second side (2)for handling downlink communication and at least a user plane function ring bridge (1020) connected to the first and the second sides wherein the user plane function ring bridge comprises a first internal link for communications from the first side to a core network side, a second internal link for communication from the core network side to the second side and a third internal link for communications from the first side to the second side.

11. A computer program comprising instructions which, when the program is executed by a computer (91), cause the computer to carry out the method of any one of claims 1 to 8.

## Patentansprüche

1. Verfahren zum Bestimmen einer virtuellen Topologie einer drahtlosen Brücke (100, 400) eines Kommunikationssystems innerhalb eines zeitsensitiven Netzwerks, wobei die drahtlose Brücke einen Satz von *M_{P}* Benutzergeräten handhabt, wobei das Kommunikationssystem ferner einen zentralisierten Netzwerkkonfigurationsknoten (190) umfasst, **dadurch gekennzeichnet, dass** das Verfahren ein Aufbauen einer virtuellen Topologie der drahtlosen Brücke und ein Bereitstellen der virtuellen Topologie der drahtlosen Brücke dem zentralisierten Netzwerkkonfigurationsknoten umfasst,
wobei die virtuelle Topologie eine erste Seite (1) zum Handhaben einer Uplink-Kommunikation, eine zweite Seite (2) zum Handhaben einer Downlink-Kommunikation und wenigstens eine Benutzerebenenfunktion-Ringbrücke (1020) umfasst, welche mit der ersten und der zweiten Seite verbunden ist, wobei die Benutzerebenenfunktion-Ringbrücke eine erste interne Verbindung für Kommunikationen von der ersten Seite zu einer Kernnetzwerkseite, eine zweite interne Verbindung für eine Kommunikation von der Kernnetzwerkseite zu der zweiten Seite und eine dritte interne Verbindung für Kommunikationen von der ersten Seite zu der zweiten Seite umfasst.

2. Verfahren nach Anspruch 1, wobei die Benutzerebenenfunktion-Ringbrücke umfasst:
- einen ersten Port, welcher einen Zugang zu der Kernnetzwerkseite bereitstellt,
- einen zweiten Port, welcher einen Zugang zu der ersten Seite bereitstellt,
- einen dritten Port, welcher einen Zugang zu der zweiten Seite bereitstellt,
- wobei die dritte interne Verbindung eine unidirektionale interne Verbindung von dem zweiten Port zu dem ersten Port ist,
- wobei die zweite interne Verbindung eine unidirektionale interne Verbindung von dem ersten Port zu dem dritten Port ist und
- wobei die erste interne Verbindung eine unidirektionale interne Verbindung von dem zweiten Port zu dem dritten Port ist.

3. Verfahren nach Anspruch 1 oder 2, wobei:
unidirektionale interne Verbindungen Verzögerungen in der bevorzugten Richtung aufweisen, welche gleich Null oder einem sehr kleinen Wert sind.

4. Verfahren nach Anspruch 1 oder 2, wobei:
- die erste Seite einen Multiplexer (1012) Mux umfasst,
- die zweite Seite einen Demultiplexer (1014) Demux umfasst und
- die virtuelle Topologie auf jeder Seite eine entsprechende Funkübertragungsbrücke (1002, 1004) umfasst.

5. Verfahren nach Anspruch 3, wobei:
- der Multiplexer einen ersten Port, welcher einen Zugang zu der Benutzerebenenfunktion-Ringbrücke bereitstellt, *Mul* zweite Ports, welche einen Zugang zu der Funkübertragungsbrücke auf der ersten Seite bereitstellen, und *Mul* unidirektionale interne Verbindungen jeweils von einem entsprechenden der *Mul* zweiten Ports zu dem ersten Port umfasst, und
- der Demultiplexer einen ersten Port, welcher einen Zugang zu der Benutzerebenenfunktion-Ringbrücke bereitstellt, *Mdl* zweite Ports, welche einen Zugang zu der Funkübertragungsbrücke auf der zweiten Seite bereitstellen, und *Mdl* unidirektionale interne Verbindungen jeweils von dem ersten Port zu einem entsprechenden der *Mdl* zweiten Ports umfasst.

6. Verfahren nach Anspruch 4, wobei die drahtlose Brücke *Mul* unabhängige Übertragungskanäle für eine Uplink-Kommunikation und *Mdl* unabhängige Übertragungskanäle für eine Downlink-Kommunikation aufweist.

7. Verfahren nach einem der Ansprüche 3 bis 5, wobei:
- die Funkübertragungsbrücke auf der ersten Seite *Mul* erste Ports, welche einen Zugang zu dem Multiplexer bereitstellen, *Mp* zweite Ports, welche einen Zugang zu den Benutzergeräten bereitstellen, und *Mul* unidirektionale interne Verbindungen jeweils von einem der *Mp* zweiten Ports zu einem der *Mul* ersten Ports umfasst,
- die Funkübertragungsbrücke auf der zweiten Seite *Mdl* erste Ports, welche einen Zugang zu dem Demultiplexer bereitstellen, *Mp* zweite Ports, welche einen Zugang zu den Benutzergeräten bereitstellen, und *Mdl* unidirektionale interne Verbindungen jeweils von einem der *Mdl* ersten Ports zu einem der *Mp* zweiten Ports umfasst, und
- die *Mul* unidirektionalen internen Verbindungen und die *Mdl* unidirektionalen internen Verbindungen Verzögerungen zugeordnet sind, welche wenigstens Funkübertragungsverzögerungen darstellen.

8. Verfahren nach einem der Ansprüche 3 bis 6, wobei die virtuelle Topologie einen virtuellen Splitter (1010) umfasst, welcher sich auf beide Seiten erstreckt und auf der ersten Seite den Multiplexer und auf der zweiten Seite den Demultiplexer umfasst.

9. Verfahren nach einem der Ansprüche 3 bis 7, wobei die virtuelle Topologie eine Übertragungsbrücke (1000) umfasst, welche sich auf beide Seiten erstreckt und auf jeder Seite die entsprechende Funkübertragungsbrücke umfasst.

10. Kommunikationssystem innerhalb eines zeitsensitiven Netzwerks, wobei das Kommunikationssystem eine drahtlose Brücke (100, 400) umfasst, welche einen Satz von P Benutzergeräten handhabt, wobei das Kommunikationssystem ferner einen zentralisierten Netzwerkkonfigurationsknoten (190) umfasst, **dadurch gekennzeichnet, dass** das Kommunikationssystem dazu eingerichtet ist, eine virtuelle Topologie der drahtlosen Brücke aufzubauen und die virtuelle Topologie der drahtlosen Brücke dem zentralisierten Netzwerkkonfigurationsknoten bereitzustellen, wobei die virtuelle Topologie eine erste Seite (1) zum Handhaben einer Uplink-Kommunikation, eine zweite Seite (2) zum Handhaben einer Downlink-Kommunikation und wenigstens eine Benutzerebenenfunktion-Ringbrücke (1020) umfasst, welche mit der ersten und der zweiten Seite verbunden ist, wobei die Benutzerebenenfunktion-Ringbrücke eine erste interne Verbindung für Kommunikationen von der ersten Seite zu einer Kernnetzwerkseite, eine zweite interne Verbindung für eine Kommunikation von der Kernnetzwerkseite zu der zweiten Seite und eine dritte interne Verbindung für Kommunikationen von der ersten Seite zu der zweiten Seite umfasst.

11. Computerprogramm, umfassend Anweisungen, welche, wenn das Programm durch einen Computer (91) ausgeführt wird, den Computer veranlassen, das Verfahren nach einem der Ansprüche 1 bis 8 auszuführen.

## Revendications

1. Procédé de détermination d'une topologie virtuelle d'un pont sans fil (100, 400) d'un système de communication au sein d'un réseau sensible au temps, le pont sans fil gérant un ensemble de *Mp* équipements utilisateur, le système de communication comprenant en outre un nœud de configuration de réseau centralisé (190), **caractérisé en ce que**
le procédé comprend la construction d'une topologie virtuelle du pont sans fil et la fourniture de la topologie virtuelle du pont sans fil au nœud de configuration de réseau central,
dans lequel la topologie virtuelle comprend un premier côté (1) pour la gestion de communication en liaison montante, un second côté (2), pour la gestion de communication en liaison descendante et au moins un pont en anneau à fonction de plan utilisateur (1020) connecté aux premier et second côtés, dans lequel le pont en anneau à fonction de plan utilisateur comprend une première liaison interne pour les communications du premier côté à un côté réseau central, une deuxième liaison interne pour la communication du côté réseau central au second côté et une troisième liaison interne pour les communications du premier côté au second côté.

2. Procédé selon la revendication 1, dans lequel le pont en anneau à fonction de plan utilisateur comprend :
- un premier port permettant l'accès au côté réseau central,
- un deuxième port permettant l'accès au premier côté,
- un troisième port permettant l'accès au second côté,
- la troisième liaison interne est une liaison interne unidirectionnelle du deuxième port au premier port,
- la deuxième liaison interne est une liaison interne unidirectionnelle du premier port au troisième port, et
- la première liaison interne est une liaison interne unidirectionnelle du deuxième port au troisième port.

3. Procédé selon la revendication 1 ou 2, dans lequel :
les liaisons internes unidirectionnelles présentent des délais dans la direction privilégiée égaux à zéro ou à une valeur très faible.

4. Procédé selon la revendication 1 ou 2, dans lequel :
- le premier côté comprend un multiplexeur (1012) Mux,
- le second côté comprend un démultiplexeur (1014) Demux, et
- la topologie virtuelle comprend, de chaque côté, un pont d'émission de radiocommunication (1002, 1004) correspondant.

5. Le procédé selon la revendication 3, dans lequel :
- le multiplexeur comprend un premier port permettant l'accès au pont en anneau à fonction de plan utilisateur, *Mul* deuxièmes ports permettant l'accès au pont d'émission de radiocommunication sur le premier côté, et *Mul* liaisons internes unidirectionnelles, chacune d'un port correspondant des *Mul* deuxièmes ports au premier port, et
- le démultiplexeur comprend un premier port permettant l'accès au pont en anneau à fonction de plan utilisateur, *Mdl* deuxièmes ports permettant l'accès au pont d'émission de radiocommunication sur le second côté, et *Mdl* liaisons internes unidirectionnelles, chacune du premier port à un port correspondant des *Mdl* deuxièmes ports.

6. Procédé selon la revendication 4, dans lequel le pont sans fil présente *Mul* canaux d'émission indépendants pour la communication en liaison montante et *Mdl* canaux d'émission indépendants pour la communication en liaison descendante.

7. Procédé selon l'une quelconque des revendications 3 à 5, dans lequel :
- le pont d'émission de radiocommunication sur le premier côté comprend *Mul* premiers ports permettant l'accès au multiplexeur, *Mp* deuxièmes ports permettant l'accès aux équipements utilisateurs, et *Mul* liaisons internes unidirectionnelles, chacune de l'un des *Mp* deuxièmes ports à l'un des *Mul* premiers ports,
- le pont d'émission de radiocommunication sur le second côté comprend *Mdl* premiers ports permettant l'accès au démultiplexeur, *Mp* deuxièmes ports permettant l'accès aux équipements utilisateurs, et *Mdl* liaisons internes unidirectionnelles, chacune de l'un des *Mdl* premiers ports à l'un des *Mp* deuxièmes ports, et
- les *Mul* liaisons internes unidirectionnelles et les *Mdl* liaisons internes unidirectionnelles étant associées à des délais représentant au moins des délais d'émission radio.

8. Procédé selon l'une quelconque des revendications 3 à 6, dans lequel la topologie virtuelle comprend un séparateur virtuel (1010) s'étendant des deux côtés et comprenant, dans le premier côté, le multiplexeur et, dans le second côté, le démultiplexeur.

9. Procédé selon l'une quelconque des revendications 3 à 7, dans lequel la topologie virtuelle comprend un pont d'émission (1000) s'étendant des deux côtés et comprenant, de chaque côté, le pont d'émission de radiocommunication correspondant.

10. Système de communication au sein d'un réseau sensible au temps, le système de communication comprenant un pont sans fil (100, 400) gérant un ensemble de P équipements utilisateur, le système de communication comprenant en outre un nœud de configuration de réseau centralisé (190), **caractérisé en ce que** le système de communication est configuré pour construire une topologie virtuelle du pont sans fil et fournir la topologie virtuelle du pont sans fil au nœud de configuration de réseau central, dans lequel la topologie virtuelle comprend un premier côté (1) pour la gestion de communication en liaison montante, un second côté (2) pour la gestion de communication en liaison descendante et au moins un pont en anneau à fonction de plan utilisateur (1020) connecté aux premier et second côtés dans lequel le pont en anneau à fonction de plan utilisateur comprend une première liaison interne pour les communications du premier côté à un côté réseau central, une deuxième liaison interne pour la communication du côté réseau central au second côté et une troisième liaison interne pour les communications du premier côté au second côté.

11. Programme informatique comprenant des instructions qui, lorsque le programme est exécuté par un ordinateur (91), amènent l'ordinateur à mettre en œuvre le procédé selon l'une quelconque des revendications 1 à 8.
